**Europäisches Patentamt**

**European Patent Office**

**Office européen des brevets**

(19)

(11) Veröffentlichungsnummer : **0 424 489 B1**

(12) # EUROPÄISCHE PATENTSCHRIFT

(45) Veröffentlichungstag der Patentschrift :
04.11.92 Patentblatt 92/45

(51) Int. Cl.$^5$ : **G01G 19/08**, G01G 23/00

(21) Anmeldenummer : **90906107.9**

(22) Anmeldetag : **03.05.90**

(86) Internationale Anmeldenummer :
**PCT/CH90/00122**

(87) Internationale Veröffentlichungsnummer :
**WO 90/13798 15.11.90 Gazette 90/26**

(54) **ACHSFEDERWAAGENSYSTEM.**

(30) Priorität : **09.05.89 CH 1744/89**

(43) Veröffentlichungstag der Anmeldung :
**02.05.91 Patentblatt 91/18**

(45) Bekanntmachung des Hinweises auf die
Patenterteilung :
**04.11.92 Patentblatt 92/45**

(84) Benannte Vertragsstaaten :
**AT CH DE FR GB IT LI SE**

(56) Entgegenhaltungen :
**EP-A- 0 218 466**
**EP-A- 0 235 386**
**DE-A- 3 702 638**
**US-A- 3 314 491**

(56) Entgegenhaltungen :
**US-A- 4 623 029**
**US-A- 4 691 792**
**US-A- 4 706 768**
**Patent Abstracts of Japan, vol. 12, No. 468**
**(P-797)(3315), 8 December 1988, & JP-A-63**
**187123**

(73) Patentinhaber : **Wirth, Gallo Messtechnik AG**
**Sonnenbergstrasse 55**
**CH-8032 Zürich (CH)**

(72) Erfinder : **WIRTH, Johannes**
**Sonnenbergstrasse 55**
**CH-8032 Zürich (CH)**

(74) Vertreter : **Salgo, Reinhold Caspar, Dr.**
**Patentanwalt Aretshalde 160**
**CH-8607 Aathal (CH)**

EP 0 424 489 B1

Jouve, 18, rue Saint-Denis, 75001 PARIS

## Beschreibung

Die vorliegende Erfindung bezieht sich auf eine an einem elastisch gefederten Fahrzeug angebrachtes 24 36 975 Wägevorrichtungen zur Ermittlung des Gewichtes der transportierten Güter, im besonderen bezieht sie sich auf solche Wägevorrichtungen, bei denen die Fahrzeugfederung als Primärfeder einer Federuntersetzung wirkt, und ein Kraftsensor von einer verhältnismässig weichen, parallel zur Primärfeder wirkenden Sekundärfeder beaufschlagt wird.

Solche Wägevorrichtungen sind an sich bekannt, so z.B. aus der US Patentschrift 4.706,768 und zahlreichen älteren Veröffentlichungen. Allen gemeinsam ist, dass die Einfederung des Fahrzeuges, das typischerweise durch Blatt- oder Schraubenfedern gefedert ist, gegenüber den Radachsen das Mass der Fahrzeugbelastung ist. Diese Einfederung wird entweder visuell erfasst (so z.B. bei DE 26 40 283 Al, FR Wägesystem mit A, GB 2 123 569 A), mittels Ultraschall gemssen (US 4,623,029) oder über den Federdruck einer parallel zur Fahrzeugfeder geschalteten linearen Feder festgestellt (US 4,706,768). Eine parallel geschaltete Messfeder ist auch aus US 3,858,173 bekannt. Deren Längenänderung wird jedoch nur zur Auslösung eines Kontaktes verwendet, falls eine vorgegebene Maximallast erreicht oder überschritten ist.

Die den Stand der Technik darstellende Lösung aus US 4,706,768 hat den Nachteil, dass der Abstandsfühler, der den über die Messfeder abzuführenden Teil der Achslast aufnimmt, im Normalbetrieb des Fahrzeuges eingefahren bleibt und nur für den Wägebetrieb ausgefahren werden soll. Der hiezu vorgesehene Ausfahrmechanismus ist ausserordentlich aufwendig gebaut und dementsprechend teuer in der Herstellung und im Unterhalt. Die Vorrichtung ist daher auch nur für den Betrieb am stehenden Fahrzeug vorgesehen; während der Fahrt bleibt der genannte Abstandsfühler eingefahren. Alle bekannten Lösungen sind zudem ausserstande beliebige Schiefstellungen des Fahrzeuges zu berücksichtigen, wenngleich dies in US 4, 623, 029 behauptet wird.

Die Aufgabe, die mit der vorliegenden Erfindung gelöst werden soll, ist die Schaffung einer Wägevorrichtung an Fahrzeugen - vorzugsweise Lastwagen - die einerseits die Nachteile der bekannten Vorrichtungen überwindet, unter jeder praktisch vorkommenden Schiefstellung des Fahrzeuges einsatzfähig ist und dabei das Gewicht der Ladung richtig ermittelt; dies sowohl im Stand, als auch während der Fahrt.

Die Lösung der vorstehenden Aufgabe ist wiedergegeben im Patentanspruch 1.

Anhand der Zeichnung wird die Erfindung näher erläutert.

Es zeigen:

Fig. 1 das dem Oberbegriff entsprechende Messprinzip,

Fig. 2 eine erste schematische Darstellung der erfindungsgemässen Wägevorrichtung,

Fig. 3 eine zweite schematische Darstellung der erfindungsgemässen Wägevorrichtung,

Fig. 4 eine dritte schematische Darstellung der erfindungsgemässen Wägevorrichtung,

Fig. 5 ein erstes Ausführungsbeispiel eines Klinometers,

Fig. 6 ein zweites Ausführungsbeispiel eines Klinometers,

Fig. 7 ein erstes Ausführungsbeispiel eines Mess-Systems,

Fig. 8 eine Variante eines Details von Fig 7,

Fig. 9 ein zweites Ausführungsbeispiel eines Mess-Systems.

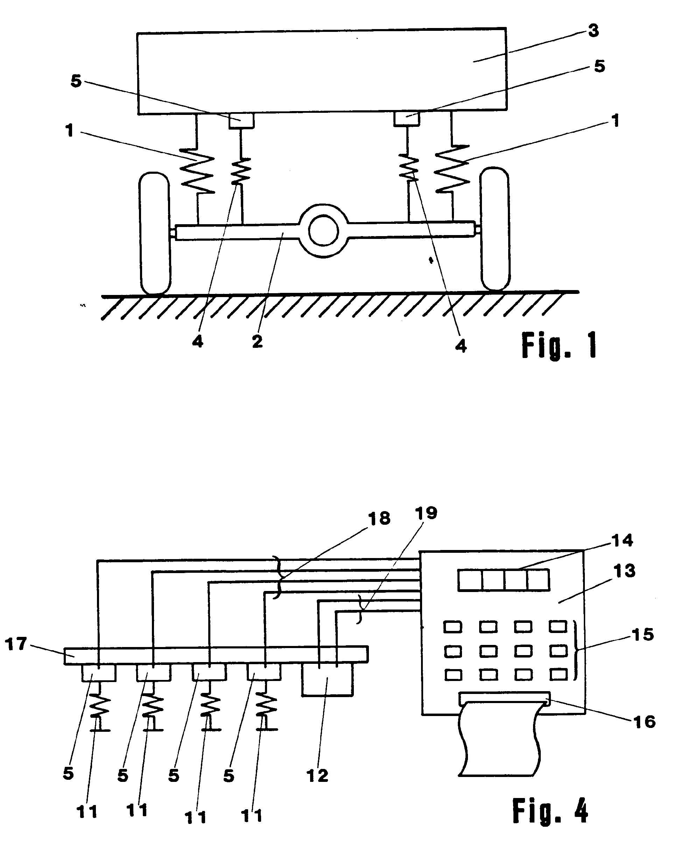

Fig. 1 zeigt schematisch das dem Oberbegriff zugrundeliegende Messprinzip. Allgemein dargestellte Fahrzeugfedern 1, stellvertretend für Blatt- oder Schraubenfedern, stützen sich je auf ein Ende einer Achse 2 und tragen zusammen mit anderen - nicht dargestellten - Federn den mit 3 bezeichneten Fahrzeugaufbau. Eine parallel zu jeder Fahrzeugfeder 1 verlaufende Messfeder 4, deren Härte wesentlich kleiner ist, als die der Fahrzeugfeder 1 führt einen kleinen Teil (entsprechend dem Verhältnis der Härten) des dieser Feder 1 zufallenden Gewichtsanteiles des Fahrzeugaufbaus 3 ebenfalls auf die Achse 2 ab. In Serie zu jeder Messfeder 4 befindet sich je ein Kraftsensor 5 an sich bekannter Bauart. Im wesentlichen ist jedes Rad (bzw. Zwillingsrad) des Fahrzeuges mit einer Vorrichtung gemäss Fig. 1 versehen. Je nach Bauart des Fahrzeuges ist es denkbar, dass bei einem doppelachsigen Fahrgestell nur die eine Achse mit zwei Messvorrichtungen gemäss Fig. 1 bestückt ist. Gemäss Stand der Technik misst der Kraftsensor 5 eine kleine Proportionale der auf das eine Rad der Achse 2 wirkenden Gewichtskraft des Fahrzeugaufbaues 3. Summation über alle Räder bzw alle Kraftsensoren 5 ergibt das Gesamtgewicht des Fahrzeugaufbaues 3. Die stillschweigende Voraussetzung dafür ist eine ebene, horizontale Fahrbahn. Steht der Fahrzeugaufbau 3 wegen geneigter Fahrbahn schief, so wird nicht mehr das volle Gewicht gemessen, da Gewichtskomponenten über Längskräfte und/oder seitliche Führungskräfte direkt an die Fahrbahn abgeleitet werden.

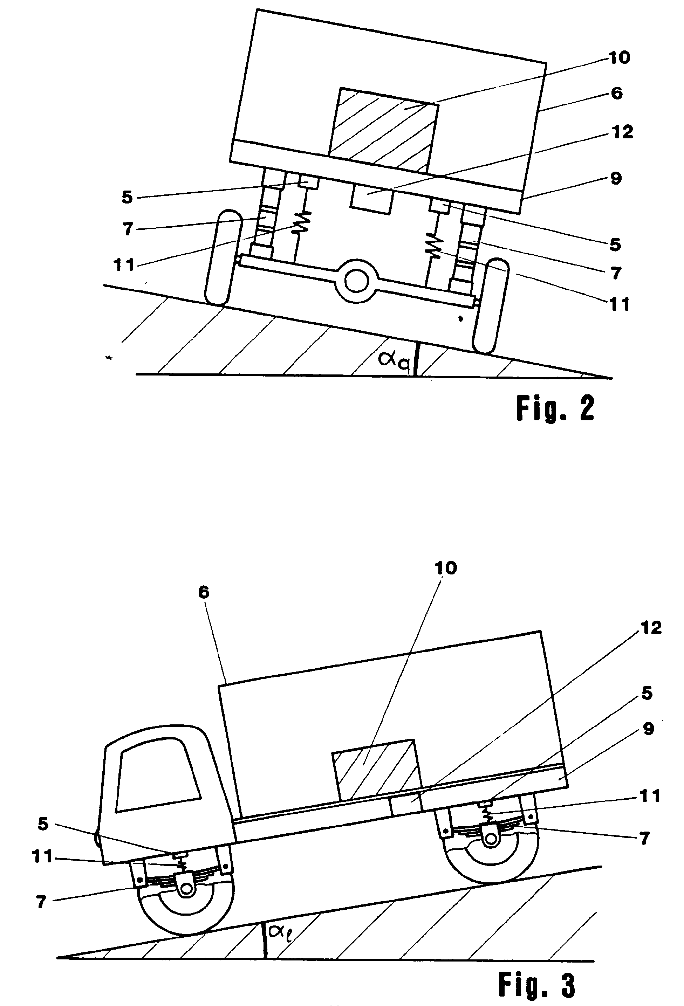

In Fig. 2 und 3 ist ein erstes Ausführungsbeispiel einer erfindungsgemässen Wägevorrichtung schematisch dargestellt.

Das mit einer erfindungsgemässen Wägevorrichtung ausgerüstete Fahrzeug 6 mit einer Brücke 9 steht in Fig. 2 auf seitlich, in Fig. 3 auf in Fahrtrichtung geneigter Fahrbahn. Im Regelfall kommen beide Neigungen in beliebigen Anteilen kombiniert vor. Das Fahrzeug 6 ist hier - entsprechend der Räderzahl - mit vier Kraftsensoren 5 ausgerüstet, wobei in den Fig. 2, 3 jeweils nur zwei sichtbar sind. Getragen wird das Fahrzeug 6 von Blattfedern 7 üblicher Bauart; anstelle von Blattfedern 7 werden auch Schraubenfedern eingesetzt, kombiniert mit (nicht dargestellten) Lenkern. Nicht dargestellt ist im Hinterachsbereich ein Stabilisator, der bewirkt, dass auch bei asymmetrischer Belastung der Brücke 9 die Last gleichmässig auf die beiden hinteren Blattfedern 7 verteilt wird, also im wesentlichen gleiche Einfederung beider Blattfedern 7 erzeugt. Die durch eine schematisch dargestellte Last 10 bewirkte Einfederung der Blattfedern 7 wird nun auf vier Messfedern 11 übertragen, die bedeutend weicher sind, als die Blattfedern 7 , und damit die Aufhängungscharakteristik des Fahrzeuges nicht merklich verändern. Die durch die Kompression der Messfedern 11 erzeugte Kraft wird auf die Kraftsensoren 5 übertragen, die beispielsweise vom Schwingungssaitentyp sind; ohne Einschränkung des Erfindungsgedankens sind andere, dem Stand der Technik entsprechende Kraftsensoren möglich.

Aufgrund der geneigten Fahrbahn werden Teile der Gewichtskräfte sowohl des ganzen Fahrzeuges 6, als auch der Last 10 tangentiell an die Fahrbahn abgeleitet, so dass die Summe aller durch die Kraftsensoren 5 gemessenen Kräfte kleiner ist, als das effektive Gesamtgewicht (immer ohne das eigentliche Fahrwerk, bestehend aus Rädern, Achsen und teilweise Lenkern und Stabilisatoren).Ist $G_{eef}$ das effektive Gesamtgewicht, und $F_G$ die Summe der durch die Kraftsensoren 5 ermittelten Kräfte, so gibt

$$F_G = \cos \alpha_q \times \cos \alpha_l \times G_{eef}$$

Solange eine am Fahrzeug selbst angebrachte Wägevorrichtung nur dazu dient, allfällige Ueberbelastungen zu vermeiden, spielen die durch Fahrbahn-Neigungen verursachten Messfehler keine Rolle. Ist es hingegen das Ziel, beispielsweise im Stückgutverkehr kundenbezogene Fahrleistungen (Gewicht x Strecke) zu statistischen oder tarifarischen Zwecken zu ermitteln, oder beim Einsammeln von Gütern wie Kehricht verursacherbezogene Kosten zu bestimmen, so ist die Berücksichtigung der Neigungswinkel $\alpha_q$ und $\alpha_l$ notwendig. Zusätzlich zu den erwähnten Elementen weist das Ausführungsbeispiel gemäss Fig. 2, 3 daher ein Klinometer 12 auf, mit welchen die Neigungswinkel $\alpha_q$ und $\alpha_l$ bestimmt werden.

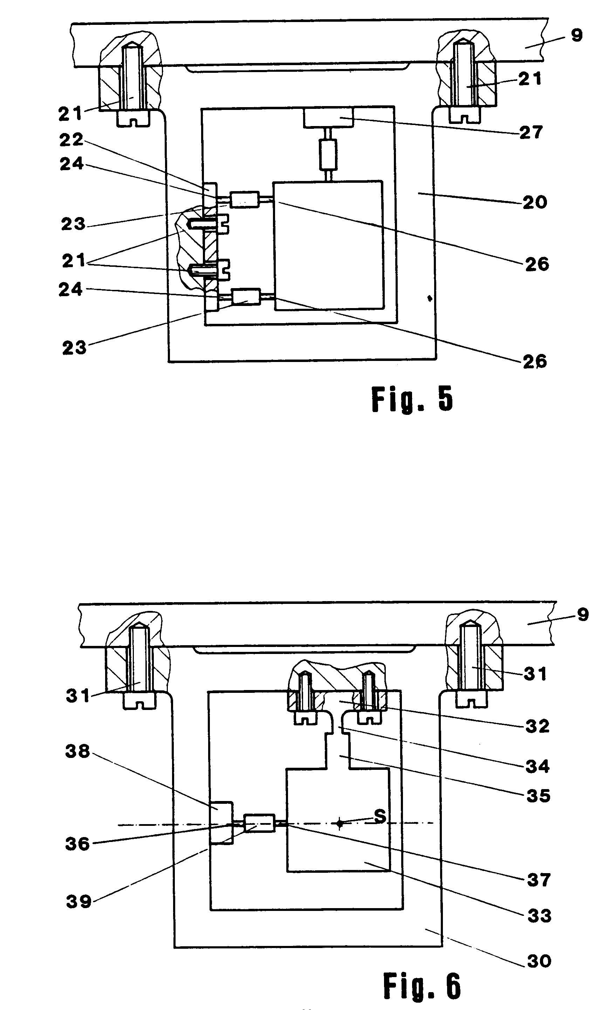

In Fig. 4 sind die vier Kraftsensoren 5 mit Messfedern 11 und das Klinometer 12 schematisch dargestellt. Sie sind befestigt an einer schematisch gezeichneten Brücke 17 und werden durch die Kräfte der unterschiedlich gespannten Messfedern 11 beaufschlagt. Das Klinometer 12 misst die Neigungswinkel $\alpha_q$ und $\alpha_l$ . Die den Messwerten entsprechenden elektrischen Grössen werden über Leitungen 18 bzw 19 an einen Rechner 13 übermittelt. Dieser enthält die nach dem Stand der Technik notwendigen Speicher- und Rechenmittel (nicht dargestellt). Ferner weist er ein Anzeigefeld 14 und ein Tastenfeld 15 auf sowie einen Drucker 16 zur Ausgabe der vor, während und nach der Fahrt wesentlichen Daten.

Die Zahl vier für die Kraftsensoren 5 und Messfedern 11 ist lediglich bei zwei Achsen erfindungswesentlich; es können bei anderer Achsenzahl sowohl weniger, als auch - im Falle mehrachsiger Lastwagen - mehr als die genannten vier Kraftsensoren vorgesehen sein. Der Rechner 13 ist vorzugsweise in der Fahrerkabine des Fahrzeuges 6 eingebaut. Der Rechner 13 ist nach dem Stand der Technik ausgerüstet zu wägetechnischen Rechenoperationen wie Tarabildung, Ermittlung des Gewichts von Zuladungen und Entladungen, die sich auf einer Sammel- und/oder Verteilfahrt ergeben.

In den Fig. 5 bis 8 sind die elektrischen Verbindungen, die in Fig. 4 mit Leitungen 18,19 bezeichnet sind, konsequent weggelassen, sind aber erfindungswesentlich.

Fig. 5 zeigt ein erstes Ausführungsbeispiel eines erfindungswesentlichen Klinometers. An geeigneter Stelle der Brücke 9 des Fahrzeuges 6 ist ein massives kastenförmiges Gestell 20 befestigt, beispielsweise mit Schrauben 21. Im Innern des Gestells 20 befindet sich eine Grundplatte 22, die an das Gestell 20 angeschraubt ist. Mit der Grundplatte 22 sind zwei im wesentlichen horizontale und parallele Lenker 23 über je ein elastisches Gelenk 24 verbunden, während eine Referenzmasse 25 über weitere elastische Gelenke 26 mit den Lenkern 23 verbunden ist. Die Referenzmasse 25 ist gefesselt durch einen Kraftsensor 27 - der vorzugsweise vom gleichen Typ ist, wie die Kraftsensoren 5 gemäss Fig. 2, 3 - der ebenfalls am Gestell 20 befestigt ist. Steht das Fahrzeug 6 und damit auch die Brücke 9 horizontal, so ist die Richtung der Gewichtskraft der Referenzmasse 25 vertikal; der Kraftsensor 27 misst also ihr Gewicht bzw eine durch die elastischen Gelenke 24, 26 bewirkte verminderte Gewichtsproportionale. Neigung des Fahrzeuges 6 um den Winkel $\alpha_q$ verursacht eine Reduktion der Gewichtskraft um den Faktor $\cos \alpha_q$; Neigung um $\alpha_l$ eine solche um $\cos \alpha_l$. Kommen beide Neigungen kombiniert vor, so ist der Reduktionsfaktor des Gewichtsanteiles der gemessenen Kraft $\cos \alpha_q$ $\cos \alpha_l$. Der Rechner 13 bildet aus den Messgrössen der Kraftsensoren 5 und der Messgrösse des Kraftsensors 27 die Masse des Fahrzeuges 6 und seiner Zuladung. Die Berücksichtigung elastischer Vorspannungen der Kraftsensoren 5, 27 ist Stand der Technik und bekannt beispielsweise aus der EP AI (WO 89/03 023).

Fig. 6 zeigt ein zweites Ausführungsbeispiel eines erfindungswesentlichen Klinometers. Ein Gestell 30, das an der Brücke 9 mit Schrauben 31 befestigt ist, trägt auf einer am Gestell 30 festgeschraubten Grundplatte 32 eine Pendelmasse 33, die an der Grundplatte 32 mittels eines elastischen Gelenkes 34 um eine senkrecht zur Zeichenebene drehbar gelagert ist. Seitlich von der Pendelmasse 33 ist am Gestell 30 ein Kraftsensor 38 befestigt, der beispielsweise vom gleichen Typ ist, wie die Kraftsensoren 5 oder 27. Die Pendelmasse 33 ist mit dem Kraftsensor 38 durch einen Stab 39 verbunden, welcher Druck- und Zugkräfte übertragen kann, dergestalt dass die im wesentlichen horizontale und durch den Stab 39 verlaufende Wirkungslinie durch den Schwerpunkt S der Pendelmasse 33 verläuft. Ferner trägt der der Stab 39 zwei Biegegelenke 36, 37, um das Auftreten von Scherkräften auf den Kraftsensor 38 zu vermeiden, bzw. zu verringern.

Ist die Längsrichtung des Fahrzeuges 6 parallel zur Zeichenebene, so wirkt, sofern $\alpha_l \neq 0$ eine Kraft auf den Kraftsensor 38; als Zugkraft, wenn das hintere Ende des Fahrzeuges 6 tiefer liegt als das vordere; als Druckkraft, falls der Neigungswinkel umgekehrt ist. Diese Kraft ist (ohne Berücksichtigung von elastischen Kräften)

$$F_l = k \cdot mg \cdot \sin \alpha_l$$

wo

k ein von der Geometrie abhängiger Proportionalitätsfaktor

m die Masse der Pendelmasse 33

g Schwerebeschleunigung

bedeuten. Der Einbezug von elastischen Vorspannungen oder Teilkräften ist aus der genannten Patentanmeldung WO 89/03 023 bekannt.

Während also das hier beschriebene Klinometer die Längsneigung des Fahrzeuges ermittelt, ist für die Messung der Querneigung $\alpha_q$ ein identisch aufgebautes, nicht dargestelltes Klinometer vorgesehen. Dessen Pendelrichtung läuft also quer zum Fahrzeug. Vorzugsweise sind beide Klinometer am gleichen Gestell 30 befestigt. Hier gilt dann entsprechend

$$F = k \cdot m \cdot g \cdot \sin \alpha_q$$

Da die Grössen k,m,g ein für allemal bestimmbare und bestimmte Konstanten sind, die im Rechner 13 gespeichert werden, lassen sich die Neigungswinkel $\alpha_q$, $\alpha_l$ leicht aus den gemessenen Kräften $F_q$ und $F_l$ ermitteln, so dass das effektive Gewicht $G_{eff}$ von Fahrzeug 6 und Zuladung nach der Gleichung

$$F = \cos \alpha_q \cdot \cos \alpha_l - G_{eff}$$

bestimmt werden kann.

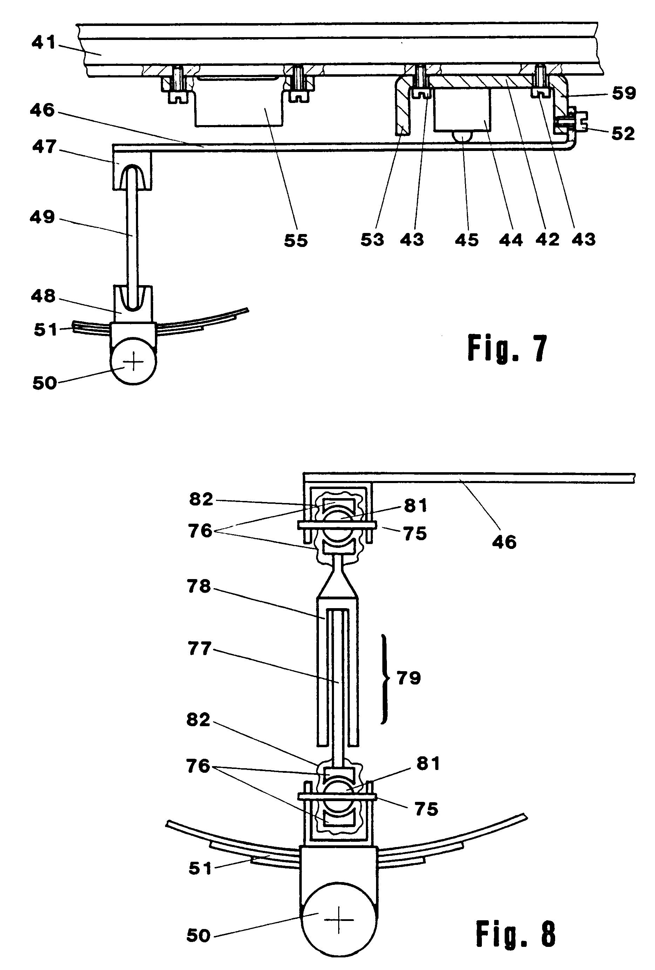

Fig. 7 zeigt ein erstes Ausführungsbeispiel einer Vorrichtung, die die auf ein Rad wirkende Kraft misst. An einem Längsholm 41 ist - beispielsweise mit Schrauben 43 - ein massiv ausgeführter, nach unten offener Kasten 42 befestigt. In Fig. 7 ist der Kasten 42 im Schnitt dargestellt. Das eine Ende einer Wand des Kastens 42 trägt, beispielsweise mittels Schrauben 52, eine am Ende abgewinkelte lange Blattfeder 46, wirkt also als Träger 59 für die Blattfeder 46. Im Inneren des Kastens 42 ist ein Kraftsensor 44 befestigt mit einem Kraftaufnahmeorgan 45. Der Kraftsensor ist wasser- und staubdicht ausgeführt. Das freie Ende der Blattfeder 46 trägt ein Drehlager 47. Ein diesem entsprechendes Drehlager 48 ist auf der Achse 50 des Fahrzeugs befestigt. Die Art der Befestigung ist lediglich schematisch angegeben, da sie je nach Hersteller und Typ des Fahrzeuges unterschiedlich ausgeführt werden kann. Zwischen die Drehlager 47, 48 ist ein Stab 49 eingefügt, der die Vertikalbewegungen der Achse 50 - die Einfederung von nur teilweise gezeichneten Blattfedern 51 - an die Blattfeder 46 überträgt. Diese untersetzt die Bewegung der Achse 50 und übersetzt die auf das Drehlager 47 wirkende Kraft nach Massgabe der zwischen den mit 47, 45, 52 bezeichneten Elementen vorliegenden Abstände, und wirkt mit dieser übersetzten Kraft auf den Kraftsensor 44. Eine mit 53 bezeichnete Kante der Wand des Kastens 42 wirkt als Ueberlastschutz des Kraftsensors 44 im Falle übermässiger Durchbiegung der Blattfeder 46.

Ein Klinometer 55, entweder vom Typ gemäss Fig. 5 oder gemäss Fig. 6 ist in der Nähe des Kastens 42 ebenfalls am Holm 91 befestigt. In einer nicht gezeichneten Variante ist das Klinometer 55 ebenfalls im Kasten 42 untergebracht.

Nicht dargestellt sind Schutzmassnahmen für die Blattfeder 46, die beiden Drehlager 47, 48, den Stab 49 und den Kasten 42. Diese können in Schutzblechen und/oder Kunststoff-Hauben oder Balgen für die ganze Vorrichtung oder Teile derselben bestehen.

Es ist selbstverständlich im Sinne der Erfindung, den Kasten 42 anders zu gestalten, beispielsweise die parallel zur Papierebene liegenden Seitenwände wegzulassen, so dass nur die im Schnitt gezeichneten Elemente, nämlich der Träger 59 und die Kante 53 in Erscheinung treten.

Wesentlich ist, dass der Träger 59 um etwa die Länge der Blattfeder 46 von der durch die Achse 50 gehenden Vertikallinie versetzt ist, so dass der Stab 49 von der Achse aus vertikal nach oben verläuft. Damit werden Fehlmessungen vermieden, die entstehen, wenn durch Bremsen des Fahrzeuges die eine Seite der Blattfeder 51 stärker belastet ist, als die andere.

Fig. 8 zeigt eine Variante zur Fig. 7. Die Verbindung der Fahrzeugachse 50 mit der Blattfeder 46 ist hier durch eine Stelze 79 hergestellt. Diese besteht aus einem Stab 77 und einer Hülse 78, die ineinander gleitfähig, durch die Vorspannung der Blattfeder 46 jedoch gegeneinander fixiert sind. Der Stab 77 ist unten, die Hülse 78 oben je an einem Kugelgelenk befestigt: Je ein Zapfen 75 ist unten auf der Achse 50 und oben an der Blattfeder 46 angebracht, wobei die Achsenrichtung der Zapfen 75 im wesentlichen senkrecht ist zur Achse 50. Kugelzonen 81 sitzen auf den Zapfen 75 . Auf die Kugelzonen 81 sind ebenfalls kugelzonenförmige Lagerschalen 76 aufgesetzt. Die aus Zapfen 75, Kugelzonen 81 und Lagerschalen 76 bestehenden Kardangelenke sind zum Schutz vor äusseren Einflüssen je von einem Balg 82 umschlossen, der an den benachbarten Bauteilen dicht angeschlossen ist. Diese erfindungsgemässe Variante erleichtert Aufbau und Abbau sowohl der Messvorrichtung, als auch von damit verbundenen Fahrzeugteilen.

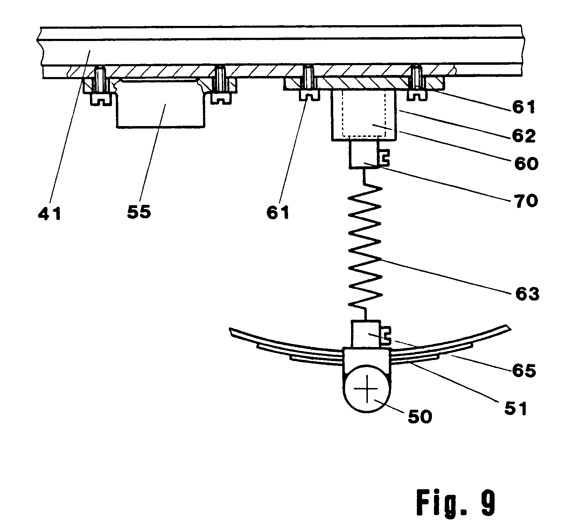

In Fig. 9 ist ein zweites Ausführungsbeispiel einer Vorrichtung dargestellt, die die auf das Ende einer Achse wirkende Kraft misst. Am Holm 41 ist hier ein staub- und wasserdichter Kasten 60 mit Schrauben 61 befestigt. Er enthält den Kraftsensor 62 mit Kraftaufnahmeorgan 70. Auf dieses wirkt eine Schraubenfeder 63. Das andere Ende der Schraubenfeder 63 ist mit einem Endstück 65 verbunden, das auf der Achse 50 befestigt ist.

Die Wirkungslinie der durch die Schraubenfeder 63 übertragenen Kraft läuft von der Achse 50 vertikal nach oben, so dass sich der Kraftsensor 62 im wesentlichen vertikal über der Achse 50 befindet. Wiederum ist die Art der Befestigung offen aus den bereits erwähnten Gründen.Die Schraubenfeder 63 ist in diesem Ausführungsbeispiel unter Zug-Vorspannung eingebaut. Einfederung der Blattfeder 51 führt somit zu einer Verkleinerung der auf das Kraftaufnahmeorgan 70 wirkenden Zugkraft. Der Vorteil dieser Ausführungsart liegt darin, dass die Schraubenfeder 63 verhältnismässig leicht und ohne Stützvorrichtung ausgeführt werden kann.

Eine nicht gezeichnete Variante hiezu besteht in einer Schraubenfeder, die Druckkräfte übertragen kann und damit kräftiger ausgeführt ist. Der Kraftsensor ist dann ebenfalls zur Aufnahme von Druckkräften ausgelegt. Auch in der Fig. 9 ist das Klinometer 55 am Holm 41 befestigt, kann aber ebenfalls im Kasten 60 selbst untergebracht werden.

Die in den Federungssystemen von Automobilen, insbesondere von Lastwagen, vorkommenden Reibungskräfte, welche auch der erfindungsgemässen Wägevorrichtung insgesamt innewohnen, bewirken Hysterese-Charakteristik der Wägekennlinien. Diese wird überwunden durch die Vibrationen, die vom laufenden Motor oder vom Fahrbetrieb auf Federung und Mess-System übertragen werden.

**Patentansprüche**

1. An einem elastisch gefederten Fahrzeug angebrachtes Wägesystem mit Wägevorrichtungen zur Ermittlung des Gewichtes der transportierten Güter, bei der die Fahrzeugfeder (51) als Primärfeder einer Federuntersetzung wirkt, und ein Kraftsensor (5,44,62) von einer verhältnismässig weichen parallel zur Primärfeder wirkenden Sekundär- oder Messfeder (7,8, 11, 46,63) beaufschlagt wird, dadurch gekennzeichnet dass,
   - jede Seite einer jeden Achse (50) des Fahrzeuges eine solche Wägevorrichtung, bestehend aus Messfeder (7,8,11,46,63) und Kraftsensor (5,44,62), aufweist
   - am Fahrzeugrahmen ein Klinometer (12) befestigt ist, mit welchem die Neigung des Fahrzeugs sowohl in Längs- als auch in Querrichtung ($\alpha_l$ bzw $\alpha_q$) festgestellt werden

kann,
   - sowohl die Wägevorrichtungen, als auch das Klinometer (12) den Messwerten entsprechende elektrische Signale abgeben.
   - die Kraftsensoren (5,44,62) und das Klinometer (12) über Leitungen (18,19) mit einem Rechner (13) verbunden sind, der aus den genannten elektrischen Signalen das Gesamtgewicht des Fahrzeugaufbaus und der Ladung bestimmen und durch weitere Rechenschritte die Gewichte von Zuladungen und Entladungen ermitteln kann.

2. System nach Patentanspruch 1, dadurch gekennzeichnet, dass
   - die Messfeder eine Blattfeder (46) ist.

3. System nach Patentanspruch 2, dadurch gekennzeichnet, dass
   - die Blattfeder (46) von einem Träger (59) getragen ist, der an einem Holm (41) des Fahrzeuges befestigt ist,
   - der Träger (59) um etwa die Länge der Blattfeder (46) von einer durch die Achse (50) laufenden Vertikallinie entfernt ist,
   - das freie Ende der Blattfeder (46) ein Drehlager (47) trägt, in das das obere Ende eines vertikalen Stabes (49) eingreift, dessen unteres Ende in einem im wesentlichen gleich gestalteten Drehlager (48) gelagert ist, und das Drehlager (48) auf der Achse (50) befestigt ist,
   - der Kraftsensor (44), in der Längsrichtung der Blattfeder (46), zwischen dem Träger (59) und der Kante (53) ebenfalls am Holm (41) befestigt ist
   - die Blattfeder (46) über ein Kraftaufnahmeorgan (45) auf den Kraftsensor (44) drückt
   - Die Bewegung der Blattfeder (46) nach oben durch eine am Holm (41) befestigte Kante (53) begrenzt ist, die als Ueberlastschutz für den Kraftsensor (44) wirkt

4. System nach Patentanspruch 3, dadurch gekennzeichnet, dass
   - der Träger (59) und die Kante (53) Teile eines nach unten offenen Kastens sind (42), in welchem auch der Kraftsensor (44) befestigt ist

5. System nach patentanspruch 2, dadurch gekennzeichnet, dass
   - die Blattfeder von einem Träger (59) getragen ist, der an einem Holm (41) des Fahrzeuges befestigt ist,
   - der Träger (59) um etwa die Länge der Blattfeder (46) von einer durch die Achse (50) laufenden Vertikallinie entfernt ist,
   - das freie Ende der Blattfeder (46) ein Kugelgelenk trägt, bestehend aus einem Zapfen (75), einer an diesem befestigten Kugelzone (81) und einer um diese schwenkbaren und ebenfalls kugelzonenförmigen Lagerschale (76), wobei die Achse des Zapfens (75) im wesentlichen senkrecht steht zur Achse (50), auf welcher ein aus gleichen Elementen (75,76, 81) aufgebautes Kugelgelenk befestigt ist,
-an der oberen Lagerschale (76) eine Hülse (78), an der unteren Lagerschale (76) ein Stab (77) befestigt sind, wobei der Stab (77) in der Hülse (78) gleitfähig gelagert ist, die beiden Teile (77,78) aber durch die Vorspannung der Blattfeder (46) gegeneinander fixiert sind,
-die beiden genannten Kugelgelenke je von einem Balg (82) umgeben sind, der an den benachbarten Bauteilen dicht angeschlossen ist.

6. System nach Patentanspruch 1, dadurch gekennzeichnet, dass die Messfeder eine Schraubenfeder (63) ist

7. System nach Patentanspruch 6, dadurch gekennzeichnet, dass
-die Schraubenfeder (63) von der Achse (50) an der sie mittels eines Endstückes (65) befestigt ist, vertikal nach oben sich erstreckt, an ihrem oberen Ende mit einem Kraftaufnahmeorgan (70) des Kraftsensors (62) verbunden ist und auf dieses Zugkräfte ausübt.

8. System nach Patentanspruch 6, dadurch gekennzeichnet, dass
-die Schraubenfeder (63) von der Achse (50) an der sie mittels eines Endstückes (65) befestigt ist, vertikal nach oben sich erstreckt, an ihrem oberen Ende mit einem Kraftaufnahmeorgan (70) des Kraftsensors (62) verbunden ist und auf dieses Druckkräfte ausübt.

9. System nach patentanspruch 2, 3, 4 oder 5, dadurch gekennzeichnet, dass
-das Klinometer (12) eine Referenzmasse (25) aufweist, welche durch zwei im wesentlichen horizontale und parallele Lenker (23) mit elastischen Gelenken (24,26) in vertikaler Richtung parallel geführt ist,
-die Referenzmasse (25) gefesselt ist durch einen Kraftsensor (27).

10. System nach einem der Patentansprüche 2, 3, 4 oder 5, dadurch gekennzeichnet, dass
-das Klinometer (12) besteht aus einer zweifachen Ausführung aller nachstehenden Elemente, nämlich einer Pendelmasse (33), die an einer im wesentlichen horizontalen Grundplatte (32) mittels eines elastischen Gelenkes (34) drehbar gelagert ist, und dass an der Pendelmasse (33) ein im wesentlichen horizontal verlaufender Stab (39) gelenkig und kraftschlüssig angeschlossen ist, der einen Kraftsensor (38) beaufschlagt, der ebenfalls an der Grundplatte (32) befestigt ist, dergestalt dass die durch den Stab (39) verlaufende Wirkungslinie durch den Schwerpunkt (S) der pendelmasse (33) geht,
-ferner die Achsen der elastischen Gelenke (34) horizontal liegen und senkrecht zueinander stehen, dergestalt dass die eine Achse in Fahrtrichtung, die andere quer dazu steht.

11. System nach einem der Patentansprüche 6, 7 oder 8, dadurch gekennzeichnet, dass
-das Klinometer (12) eine Referenzmasse (25) aufweist, welche durch zwei im wesentlichen horizontale und parallele Lenker (23) mit elastischen Gelenken (24,26) in vertikaler Richtung parallel geführt ist,
-die Referenzmasse (25) gefesselt ist durch einen Kraftsensor (27).

12. System nach einem der Patentansprüche 6, 7 oder 8, dadurch gekennzeichnet, dass
-das Klinometer (12) besteht aus einer zweifachen Ausführung aller nachstehenden Elemente, nämlich einer Pendelmasse (33), die an einer im wesentlichen horizontalen Grundplatte (32) mittels eines elastischen Gelenkes (34) drehbar gelagert ist, und dass an der Pendelmasse (33) ein im wesentlichen horizontal verlaufender Stab (39) gelenkig und kraftschlüssig angeschlossen ist, der einen Kraftsensor (38) beaufschlagt, der ebenfalls an der Grundplatte (32) befestigt ist, dergestalt dass die durch den Stab (39) verlaufende Wirkungslinie durch den Schwerpunkt (S) der Pendelmasse (33) geht,
-ferner die Achsen der elastischen Gelenke (34) horizontal liegen und senkrecht zueinander stehen, dergestalt dass die eine Achse in Fahrtrichtung, die andere quer dazu steht.

**Claims**

1. A weighing system fitted on an elastically sprung vehicle, with weighing devices, for ascertaining the weight of the transported goods, in which the vehicle spring (51) acts as a primary spring of a spring step-down system, and a force sensor (5, 44, 62) is activated by a relatively soft secondary or measuring spring (7, 8, 11, 46, 63) acting parallel to the primary spring, characterised in that
-each side of each axle (50) of the vehicle comprises such a weighing device, comprising a measuring spring (7, 8, 11, 46, 63) and a force sensor (5, 44, 62),
-a clinometer (12) is secured on the vehicle chassis, with which the inclination of the vehicle can be ascertained both in the longitudinal and in the transverse direction ($\alpha_l$ and $\alpha_q$),
-both the weighing device and the clinometer (12) generate electric singals corresponding to the measured values,
-the force sensors (5, 44, 62) and the clinometer (12) are connected through leads (18, 19) with a computer (13) which is able from the said electric signals to determine the total weight of the vehicle body and the cargo and can ascertain, by further computation steps, the weights of further loads and discharges.

2. A system according to Patent Claim 1, characterised in that the measuring spring is a leaf spring (46).

3. A system according to Patent Claim 1, characterised in that the leaf spring (46) is carried by a carrier (59) which is secured on a girder (41) of the vehicle,
    -the carrier (59) is spaced by about the length of the leaf spring (46) from a vertical line passing through the axle 50,
    -the free end of the leaf spring (46) carries a pivot bearing (47) in which there engages the upper end of a vertical bar (49), the lower end of which is mounted in a pivot bearing (48) of substantially like formation, and the pivot bearing (48) is secured on the axle (50),
    -the force sensor (44), in the longitudinal direction of the leaf spring (46), is secured between the carrier (59) and the edge (53) likewise on the girder (41),
    -the leaf spring (46) presses through a force receiving element (45) on the force sensor (44),
    -the movement of the leaf spring (46) upwards is limited by an edge (53) secured to the girder (41) and serving as an overload protection for the force sensor (44).

4. A system according to Patent Claim 3, characterised in that the carrier (59) and the edge (53) are parts of a downwardly open housing (42) in which the force sensor (44) too is secured.

5. A system according to Patent Claim 2, characterised in that the leaf spring is carried by a carrier (59) which is secured to a girder (41) of the vehicle,
    -the carrier (59) is spaced by about the length of the leaf spring (46) from a vertical line extending through the axle (50),
    -the free end of the leaf spring (46) carries a ball joint comprising a peg (75), a ball portion (81) secured thereto and a bearing shell (76) pivotable about this and likewise of part spherical form, the axis of the peg (75) extending substantially perpendicularly to the axle (50) on which there is secured a ball joint assembled from similar elements (75, 76, 81),
-a sleeve (78) is secured on the upper bearing shell (76) and a bar (77) is secured on the lower bearing shell (76), the bar (77) being mounted for sliding in the sleeve (78) but the two parts (77, 78) being fixed against one another by the initial stress of the leaf spring (46),
-the two said ball joints are each surrounded by a bellows (82) tightly attached to the neighbouring components.

6. A system according to Patent Claim 1, characterised in that the measuring spring is a helical spring (63).

7. A system according to Patent Claim 6, characterised in that the helical spring (63) extends vertically upwardly from the axle (50) to which it is made fast by means of an end piece (65), is connected at its upper end with a force receiving element (70) of the force sensor (62), and exerts traction forces upon the latter.

8. A system according to Patent Claim 6, characterised in that the helical spring (63) extends vertically upwardly from the axle (50) on which it is secured by means of an end piece (65), is connected at its upper end with a force receiving element (70) of the force sensor (62), and exerts pressure forces upon the latter.

9. A system according to any one or more of Patent Claims 2, 3, 4, or 5, characterised in that
    -the clinometer (12) comprises a reference mass (25) which is guided parallel in a vertical direction by two substantially horizontal and parallel links (23) with elastic joints (24, 26),
    -the reference mass (25) is confined by a force sensor (27).

10. A system according to any one of Patent Claims 2, 3, 4, or 5, characterised in that
    -the clinometer (12) comprises a two-fold embodiment of all following elements, namely a pendulum mass (33) which is rotatably mounted on a substantially horizontal base plate (32) by means of an elastic joint (34), and in that on the pendulum mass (33) there is articulatedly and force-engagingly attached a substantially horizontally extending bar (39) which acts upon a force sensor (38) which is likewise secured to the base plate (32) in such a way that the line of action passing through the bar (39) passes through the centre of gravity (S) of the pendulum mass (33),

-furthermore the axles of the elastic joints (34) lie horizontally and perpendicularly to one another, in such a way that the one axle stands in the direction of travel, and the other transversely thereof.

11. A system according to any one of Patent Claims 6, 7 or 8, characterised in that

   -the clinometer (12) comprises a reference mass (25) which is guided parallel in the vertical direction by two substantially horizontal and parallel links (23) with elastic joints (24, 26).

   -the reference mass (25) is made fast by a force sensor (27).

12. A system according to any one of Patent Claims 6, 7 or 8, characterised in that

   -the clinometer (12) comprises a two-fold embodiment of all the following elements, namely a pendulum mass (33) which is rotatably mounted on a substantially horizontal base plate (32) by means of an elastic joint (34), and in that on the pendulum mass (33) a substantially horizontally extending bar (39) is attached in articulate and force-engaging manner which acts upon a force sensor (38) which likewise is secured to the base plate (32) in such a manner that the line of action passing through the bar (39) passes through the centre of gravity (S) of the pendulum mass (33).

   -furthermore the axles of the elastic joints (34) lie horizontally and stand perpendicularly in relation to one another, in such a way that the one axle stands in the riving direction, and the other transversely thereof.

**Revendications**

1. Système de pesage monté sur un véhicule à suspension élastique, comportant des dispositifs de pesage pour calculer le poids des produits transportés, pour lesquels la suspension (51) du véhicule agit comme ressort primaire d'une démultiplication par ressorts, et un capteur de force (5, 44, 62) est sollicité par un ressort secondaire ou ressort de mesure (7, 8, 11, 46, 63) relativement mou et agissant parallèlement au ressort primaire, caractérisé en ce que

   -chaque côté d'un essieu (50) du véhicule possède un dispositif de pesage de ce type, composé d'un ressort de mesure (7, 8, 11, 46, 63) et d'un capteur de force (5, 44, 62),

-il est prévu, fixé au châssis du véhicule, un clinomètre (12) à l'aide duquel l'inclinaison du véhicule aussi bien dans le sens longitudinal que dans le sens transversal ($\alpha_l$ et $\alpha_q$) peut être déterminée,

-les dispositifs de pesage ainsi que le clinomètre (12) émettent des signaux électriques correspondant aux valeurs de mesure,

-les capteurs de force (5, 44, 62) et le clinomètre (12) sont reliés, par l'intermédiaire de lignes (18, 19), à un calculateur (13) qui peut définir, à partir desdits signaux électriques, le poids total de la carrosserie du véhicule et du chargement, et calculer, à l'aide d'autres phases de calcul, les poids de charges utiles et de déchargements.

2. Système selon la revendication 1, caractérisé en ce que

   -le ressort de mesure est un ressort à lame (46).

3. Système selon la revendication 2, caractérisé en ce que

   -le ressort à lame (46) est porté par un support (59) qui est fixé à un élément longitudinal (41) du véhicule,

   -le support (59) est éloigné d'une ligne verticale traversant l'essieu (50), environ d'une distance correspondant à la longueur du ressort à lame (46),

   -l'extrémité libre du ressort à lame (46) porte un coussinet de pivotement (47) dans lequel est en prise l'extrémité supérieure d'une barre verticale (49) dont l'extrémité inférieure est montée dans un coussinet de pivotement (48) présentant sensiblement la même configuration, et le coussinet de pivotement (48) est fixé sur l'essieu (50),

   -le capteur de force (44) est également fixé à l'élément longitudinal (41), dans le sens longitudinal du ressort à lame (46), entre le support (59) et le bord (53),

   -le ressort à lame (46) appuie sur le capteur de force (44) par l'intermédiaire d'un organe récepteur de force (45),

   -le mouvement du ressort à lame (46) vers le haut est limité par un bord (53) fixé à l'élément longitudinal (41), qui agit comme protection contre les surcharges pour le capteur de force (44).

4. Système selon la revendication 3, caractérisé en ce que

   -le support (59) et le bord (53) sont des éléments d'un boîtier (42) ouvert vers le bas, dans lequel est également fixé le capteur de force (44).

**5.** Système selon la revendication 2, caractérisé en ce que

-le ressort à lame est porté par un support (59) qui est fixé à l'élément longitudinal (41) du véhicule,

-le support (59) est éloigné d'une ligne verticale traversant l'essieu (50), environ d'une distance correspondant à la longueur du ressort à lame (46),

-l'extrémité libre du ressort à lame (46) porte un joint articulé composé d'un tourillon (75), d'une zone sphérique (81) fixée à celui-ci et d'une coquille de coussinet (76) apte à pivoter autour de celle-ci et également en forme de zone sphérique, l'axe du tourillon (75) étant sensiblement perpendiculaire à l'essieu (50) sur lequel est fixé un joint articulé formé d'éléments identiques (75, 76, 81),

-un manchon (78) est fixé à la coquille de coussinet supérieure (76) et une barre (77) à la coquille de coussinet inférieure (76), la barre (77) étant montée apte à coulisser dans le manchon (78) mais les deux éléments (77, 78) étant fixés l'un par rapport à l'autre par la précontrainte du ressort à lame (46),

-les deux joints articulés cités sont entourés chacun d'un soufflet (82) qui est relié de façon étanche aux éléments de construction voisins.

**6.** Système selon la revendication 1, caractérisé en ce que le ressort de mesure est un ressort cylindrique (63).

**7.** Système selon la revendication 6, caractérisé en ce que

-le ressort cylindrique (63) s'étend à la verticale vers le haut à partir de l'essieu (50) auquel il est fixé à l'aide d'une pièce d'extrémité (65), est relié, au niveau de son extrémité supérieure, à un organe récepteur de force (70) du capteur de force (62) et exerce des forces de traction sur ledit organe.

**8.** Système selon la revendication 6, caractérisé en ce que

-le ressort cylindrique (63) s'étend à la verticale vers le haut à partir de l'essieu (50) auquel il est fixé à l'aide d'une pièce d'extrémité (65), est relié, au niveau de son extrémité supérieure, à un organe récepteur de force (70) du capteur de force (62) et exerce des forces de pression sur ledit organe.

**9.** Système selon les revendications 2, 3, 4 ou 5, caractérisé en ce que

-le clinomètre (12) possède une masse de référence (25) qui est guidée parallèlement, dans le sens vertical, par deux bras oscillants (23) sensiblement horizontaux et parallèles comportant des joints articulés élastiques (24, 26),

-la masse de référence (25) est immobilisée par un capteur de force (27).

**10.** Système selon l'une des revendications 2, 3, 4 ou 5, caractérisé en ce que

-le clinomètre (12) se compose d'une réalisation en double de tous les éléments qui suivent, à savoir d'une masse oscillante (33) qui est montée pivotante, à l'aide d'un joint articulé élastique (34), au niveau d'une plaque de montage (32) sensiblement horizontale, et en ce qu'il est prévu, reliée de façon articulée et par force à la masse oscillante (33), une barre (39) s'étendant sensiblement à l'horizontale et qui sollicite un capteur de force (38) fixé, lui aussi, à la plaque de montage (32), de sorte que la ligne d'action traversant la barre (39) passe par le centre de gravité (S) de la masse oscillante (33),

-les axes des joints articulés élastiques (34) sont à l'horizontale et dressés perpendiculairement les uns par rapport aux autres, de sorte qu'un premier axe soit dressé dans le sens de la marche et un second transversalement à celui-ci.

**11.** Système selon l'une des revendications 6, 7 ou 8, caractérisé en ce que

-le clinomètre (12) possède une masse de référence (25) qui est guidée parallèlement, dans le sens vertical, par deux bras oscillants (23) sensiblement horizontaux et parallèles comportant des joints articulés élastiques (24, 26),

-la masse de référence (25) est immobilisée par un capteur de force (27).

**12.** Système selon l'une des revendications 6, 7 ou 8, caractérisé en ce que

-le clinomètre (12) se compose d'une réalisation en double de tous les éléments qui suivent, à savoir d'une masse oscillante (33) qui est montée pivotante, à l'aide d'un joint articulé élastique (34), au niveau d'une plaque de montage (32) sensiblement horizontale, et en ce qu'il est prévu, reliée de façon articulée et par force à la masse oscillante (33), une barre (39) s'étendant sensiblement à l'horizontale et qui sollicite un capteur de force (38) fixé, lui aussi, à la plaque de montage (32), de sorte que la ligne d'action traversant la barre (39) passe par le centre de gravité (S) de la masse oscillante (33),

-les axes des joints articulés élastiques (34) sont à l'horizontale et dressés perpendiculairement les uns par rapport aux autres, de sorte qu'un premier axe soit dressé dans le sens de la marche et un second transversalement à celui-ci.

Fig. 1

Fig. 4

**Fig. 2**

**Fig. 3**

Fig. 5

Fig. 6

Fig. 7

Fig. 8

**Fig. 9**